# EUROPEAN PATENT APPLICATION

(11) **EP 3 951 479 A1**
(43) Date of publication of application: **09.02.2022**
(21) Application number: 20777840.8
(22) Date of filing: 16.03.2020
(51) Int. Cl.: G02B 30/30, B60J 1/02, B60K 35/00, G02B 27/01, H04N 13/312, H04N 13/346, H04N 13/361, H04N 13/363

(54) **IMAGE DISPLAY MODULE, MOBILE OBJECT, AND CONCAVE MIRROR**

(30) Priority: 26.03.2019 JP 2019059288
(71) Applicant: Kyocera Corporation, Kyoto-shi, Kyoto 612-8501 (JP)
(72) Inventor: KUSAFUKA, Kaoru, Kyoto-shi, Kyoto 612-8501 (JP)
(74) Representative: Viering, Jentschura & Partner mbB Patent- und Rechtsanwälte
(86) International application number: PCT/JP2020/011544
(87) International publication number: WO 2020/196056

(57) **Abstract**

An image display module, a movable object, and a concave mirror improve the quality of a stereoscopic image provided to a user. An image display module (12) includes a display (20) that displays a planar image and a parallax image projected to a first eye and a second eye of a user through an optical system (30), a barrier (21) that causes parallax between the first eye and the second eye by defining a traveling direction of image light for the parallax image, and a concave mirror (18) that includes a part of the optical system (30). The parallax image projected through the optical system (30) has less distortion than the planar image projected through the optical system (30).

## Description

### FIELD

The present disclosure relates to an image display module, a movable object, and a concave mirror.

### BACKGROUND

A known image display device for providing stereoscopic vision corrects distortion through an optical system (refer to, for example, Patent Literature 1).

### CITATION LIST

### PATENT LITERATURE

Patent Literature 1: Japanese Unexamined Patent Application Publication No. 2019-15823

### BRIEF SUMMARY

An image display module according to one embodiment of the present disclosure includes a display, a barrier, and a concave mirror. The display displays a planar image and a parallax image projected to a first eye and a second eye of a user through an optical system. The barrier causes parallax between the first eye and the second eye by defining a traveling direction of image light for the parallax image. The concave mirror includes a part of the optical system. The parallax image projected through the optical system has less distortion than the planar image projected through the optical system.

A movable object according to one embodiment of the present disclosure includes an image display module. The image display module includes a display, a barrier, and a concave mirror. The display displays a planar image and a parallax image projected to a first eye and a second eye of a user through an optical system. The barrier causes parallax between the first eye and the second eye by defining a traveling direction of image light for the parallax image. The concave mirror includes a part of the optical system. The movable object includes a windshield including a part of the optical system. The parallax image projected through the optical system has less distortion than the planar image projected through the optical system.

A concave mirror according to one embodiment of the present disclosure includes a part of an optical system that projects a planar image and a parallax image to a first eye and a second eye of a user. The parallax image projected through the optical system has less distortion than the planar image projected through the optical system.

An image display module according to one embodiment of the present disclosure includes a display, a barrier, and a concave mirror. The display displays a parallax image projected to a first eye and a second eye of a user through an optical system. The barrier causes parallax between the first eye and the second eye by defining a traveling direction of image light for the parallax image. The concave mirror includes a part of the optical system. An image for the barrier projected through the optical system has less distortion than an image for the display projected through the optical system.

An image display module according to one embodiment of the present disclosure includes a display, a barrier, and a concave mirror. The display displays a parallax image projected to a first eye and a second eye of a user through an optical system. The barrier causes parallax between the first eye and the second eye by defining a traveling direction of image light for the parallax image. The concave mirror includes a part of the optical system. The barrier has a magnification provided by the optical system higher than a magnification of the display provided by the optical system.

### BRIEF DESCRIPTION OF DRAWINGS

The objects, features, and advantages of the present disclosure will become more apparent from the following detailed description and the drawings.
FIG. 1 is a schematic diagram of a movable object according to one embodiment of the present disclosure, showing an example structure.
FIG. 2 is a schematic diagram of a three-dimensional projector in FIG. 1.
FIG. 3 is a plan view of a display surface showing its example structure.
FIG. 4 is a plan view of a barrier showing its example structure.
FIG. 5 is a schematic diagram describing the relationship between the eyes of a user, a display, and the barrier.
FIG. 6 is a diagram showing example distortion of a virtual image projected through an optical system.
FIG. 7 is a graph showing an example relationship between a distance from a concave mirror and a magnification.

### DETAILED DESCRIPTION

An embodiment of the present disclosure will now be described in detail with reference to the drawings. The drawings used herein are schematic and are not drawn to scale relative to the actual size of each component.

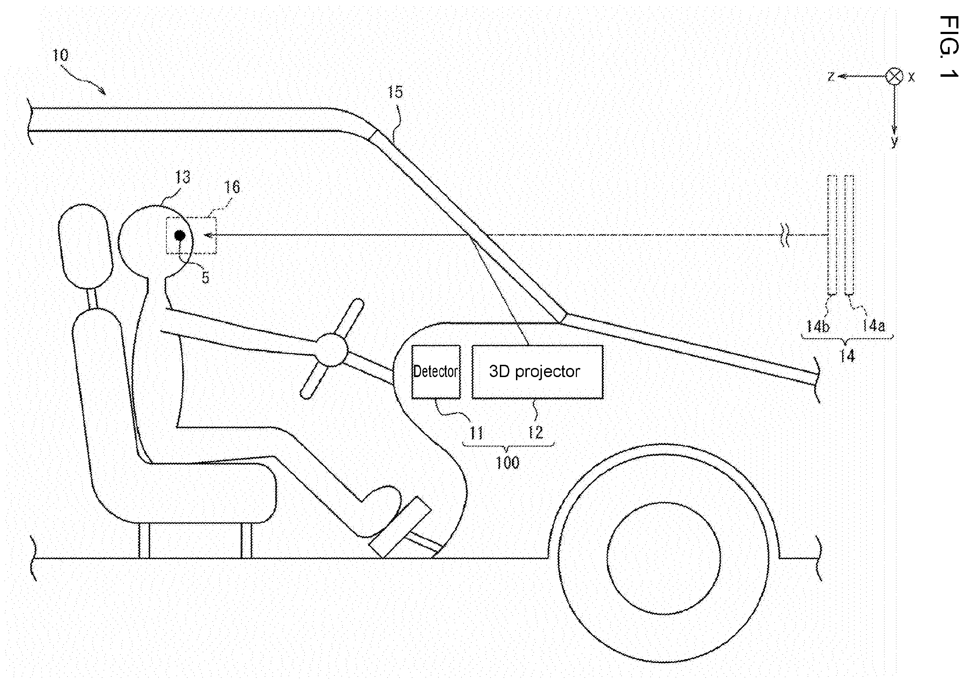

As shown in FIG. 1, a movable object 10 according to one embodiment of the present disclosure includes a three-dimensional (3D) projection system 100 and an optical member 15. The 3D projection system 100 includes a 3D projector 12. The movable object 10 incorporates the 3D projection system 100 and the 3D projector 12.

The 3D projector 12 may be at any position inside or outside the movable object 10. For example, the 3D projector 12 may be on a dashboard in the movable object 10. The 3D projector 12 emits image light toward the optical member 15.

The optical member 15 reflects image light emitted from the 3D projector 12. The image light reflected off the optical member 15 reaches an eye box 16. The eye box 16 is a region in real space in which eyes 5 of a user 13 are expected to be located based on, for example, the body shape, posture, and changes in the posture of the user 13. The eye box 16 may have any shape. The eye box 16 may include a planar or 3D region. The solid arrow in FIG. 1 indicates a path traveled by at least a part of image light emitted from the 3D projector 12 to reach the eye box 16. The path traveled by image light is also referred to as an optical path. With the eyes 5 of the user 13 located in the eye box 16 receiving image light, the user 13 can view a virtual image 14. The virtual image 14 is on the dot-and-dash line extending frontward from the path extending from the optical member 15 to the eyes 5. The 3D projector 12 can function as a head-up display that enables the user 13 to view the virtual image 14. The optical member 15 may include, for example, a windshield or a combiner. In the present embodiment, the optical member 15 is a windshield. In FIG. 1, the direction in which the eyes 5 of the user 13 are aligned corresponds to x-direction. The vertical direction corresponds to y-direction. A direction orthogonal to x-direction and y-direction corresponds to z-direction.

Examples of the movable object in the present disclosure include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an agricultural vehicle and a construction vehicle. Examples of the industrial vehicle include a forklift and a golf cart. Examples of the agricultural vehicle include a tractor, a cultivator, a transplanter, a binder, a combine, and a lawn mower. Examples of the construction vehicle include a bulldozer, a scraper, a power shovel, a crane vehicle, a dump truck, and a road roller. Examples of the vehicle may include man-powered vehicles. The classification of the vehicle is not limited to the above examples. Examples of the automobile include an industrial vehicle travelling on a road. One type of vehicle may fall within a plurality of classes. Examples of the vessel include a jet ski, a boat, and a tanker. Examples of the aircraft include a fixed-wing aircraft and a rotary-wing aircraft.

The 3D projection system 100 may further include a detector 11 that detects the positions of the eyes 5 of the user 13. The detector 11 detects the positions of the eyes 5 of the user 13 and outputs the detected positions of the eyes 5 to the 3D projector 12. The 3D projector 12 may control, based on the positions of the eyes 5 of the user 13 detected by the detector 11, an image to be projected. The detector 11 may be at any position inside or outside the movable object 10. For example, the detector 11 may be on a dashboard in the movable object 10. The detector 11 may output, to the 3D projector 12, information indicating the positions of the eyes 5, for example, with wires, wirelessly, or through a controller area network (CAN).

The detector 11 may include an imaging device. The imaging device may include, for example, a charge-coupled device (CCD) image sensor or a complementary metal-oxide semiconductor (CMOS) image sensor. The imaging device can capture an image of the face of the user 13. The imaging range of the imaging device includes the eye box 16. The user 13 may include, for example, the driver of the movable object 10. The detector 11 may detect, based on a captured image generated with the imaging device, the positions of the two eyes of the user 13 in real space.

The detector 11 may include no imaging device, and may be connected to an imaging device. The detector 11 may include an input terminal for receiving a signal from the imaging device. In this case, the imaging device may be directly connected to the input terminal. The detector 11 may be indirectly connected to the input terminal with a shared network. The detector 11 may detect the positions of the eyes 5 of the user 13 based on an image signal received through the input terminal.

The detector 11 may include, for example, a sensor. The sensor may be, for example, an ultrasonic sensor or an optical sensor. The detector 11 may detect the position of the head of the user 13 with the sensor, and detect the positions of the eyes 5 of the user 13 based on the position of the head. The detector 11 may use two or more sensors to detect the positions of the eyes 5 of the user 13 as coordinates in 3D space.

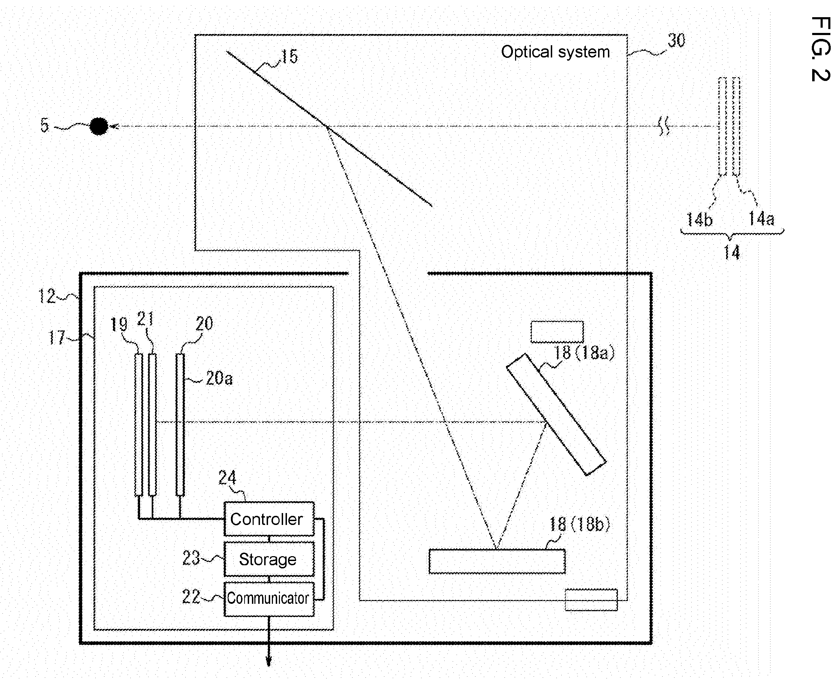

As shown in FIG. 2, the 3D projector 12 includes a 3D display device 17 and an optical element 18. The 3D projector 12 is also referred to as an image display module. The 3D display device 17 includes a backlight 19, a display 20 including a display surface 20a, a barrier 21, and a controller 24. The 3D display device 17 may further include a communicator 22. The 3D display device 17 may further include a storage 23.

The optical element 18 may include a first mirror 18a and a second mirror 18b. At least either the first mirror 18a or the second mirror 18b may have optical power. In the present embodiment, the first mirror 18a is a concave mirror having optical power. The second mirror 18b is a plane mirror. The optical element 18 may function as a magnifying optical system that magnifies an image displayed by the 3D display device 17. The dot-and-dash arrow in FIG. 2 indicates a path traveled by at least a part of image light emitted from the 3D display device 17 to be reflected off the first mirror 18a and the second mirror 18b and then exit the 3D projector 12. The image light that has exited the 3D projector 12 reaches the optical member 15, is reflected off the optical member 15, and then reaches the eyes 5 of the user 13.

This allows the user 13 to view the image displayed by the 3D display device 17.

The optical element 18 and the optical member 15 allow image light emitted from the 3D display device 17 to reach the eyes 5 of the user 13. The optical element 18 and the optical member 15 may form an optical system 30. In other words, the optical system 30 includes the optical element 18 and the optical member 15. The optical system 30 allows image light emitted from the 3D display device 17 to travel along the optical path indicated by the dot-and-dash line and reach the eyes 5 of the user 13. The optical system 30 may control the traveling direction of image light to enlarge or reduce an image viewable by the user 13. The optical system 30 may control the traveling direction of image light to deform an image viewable by the user 13 based on a predetermined matrix.

The optical element 18 may have a structure different from the illustrated structure. The optical element 18 may include a concave mirror, a convex mirror, or a plane mirror. The concave mirror or the convex mirror may be at least partially spherical or aspherical. The optical element 18 may be one element or may include three or more elements, instead of two elements. The optical element 18 may include a lens instead of or in addition to a mirror. The lens may be a concave lens or a convex lens. The lens may be at least partially spherical or aspherical.

The backlight 19 is more away from the user 13 than the display 20 and the barrier 21 along the optical path. Hereafter in the present disclosure, being nearer and being more away refer to shorter and longer distances along the optical path. The backlight 19 emits light toward the barrier 21 and the display 20. At least a part of light emitted by the backlight 19 travels along the optical path indicated by the dot-and-dash line and reaches the eyes 5 of the user 13. The backlight 19 may include a light-emitting diode (LED) or a light emitter such as an organic electroluminescence (EL) element and an inorganic EL element. The backlight 19 may have any structure that allows control of the light intensity and the light intensity distribution.

The display 20 includes a display panel. The display 20 may be, for example, a liquid-crystal device such as a liquid-crystal display (LCD). In the present embodiment, the display 20 includes a transmissive liquid-crystal display panel. The display 20 is not limited to this, and may include any of various display panels.

The display 20 includes multiple pixels and controls the transmittance of light from the backlight 19 incident on each pixel to emit image light that then reaches the eyes 5 of the user 13. The user 13 views an image formed by image light emitted from each pixel in the display 20.

The barrier 21 defines the traveling direction of incident light. With the barrier 21 nearer the backlight 19 than the display 20 along the optical path, light emitted from the backlight 19 enters the barrier 21 and then enters the display 20. In this case, the barrier 21 blocks or attenuates a part of light emitted from the backlight 19 and transmits another part of the light to the display 20. The display 20 emits incident light traveling in a direction defined by the barrier 21 as image light traveling in the same direction. With the display 20 nearer the backlight 19 than the barrier 21 along the optical path, light emitted from the backlight 19 enters the display 20 and then enters the barrier 21. In this case, the barrier 21 blocks or attenuates a part of image light emitted from the display 20 and transmits another part of the image light to the eyes 5 of the user 13.

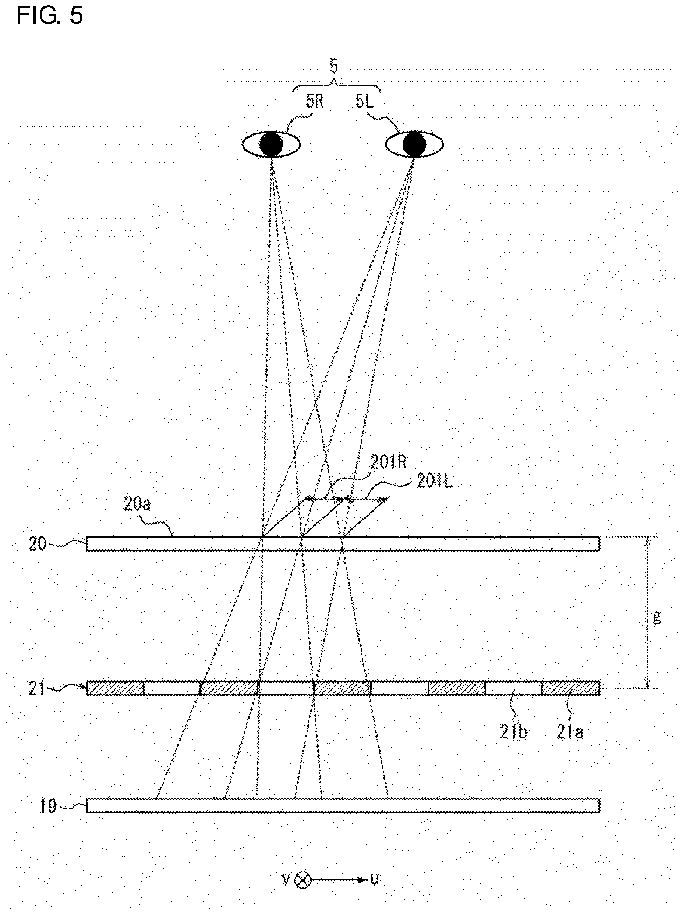

Irrespective of whether the display 20 or the barrier 21 is nearer the user 13, the barrier 21 can control the traveling direction of image light. The barrier 21 allows a part of image light emitted from the display 20 to reach one of the left eye 5L and the right eye 5R (refer to FIG. 5) of the user 13, and another part of the image light to reach the other one of the left eye 5L and the right eye 5R of the user 13. In other words, the barrier 21 directs at least a part of image light toward the left eye 5L of the user 13 and toward the right eye 5R of the user 13. The left eye 5L is also referred to as a first eye, and the right eye 5R as a second eye. In the present embodiment, the barrier 21 is located between the backlight 19 and the display 20. In other words, light emitted from the backlight 19 first enters the barrier 21 and then enters the display 20.

The barrier 21 defines the traveling direction of image light to allow each of the left eye 5L and the right eye 5R of the user 13 to receive different image light. Each of the left eye 5L and the right eye 5R of the user 13 can thus view a different image.

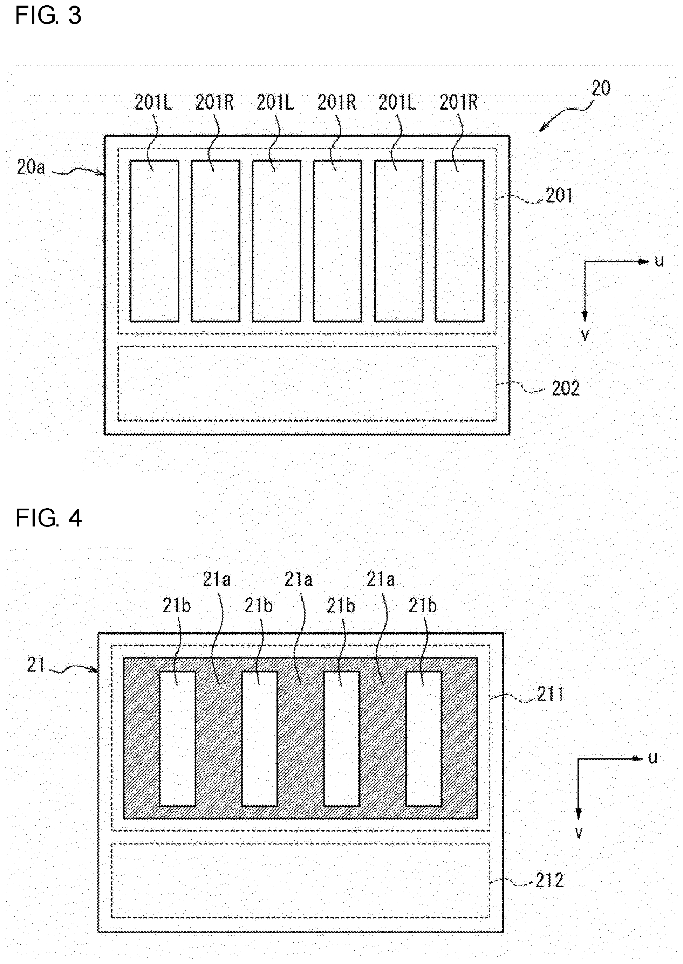

As shown in FIG. 3, the display 20 includes, on the display surface 20a, a first display area 201 and a second display area 202. The first display area 201 includes left-eye viewing areas 201L viewable by the left eye 5L of the user 13 and right-eye viewing areas 201R viewable by the right eye 5R of the user 13. The display 20 displays a parallax image including left-eye images viewable by the left eye 5L of the user 13 and right-eye images viewable by the right eye 5R of the user 13. A parallax image refers to an image projected to the left eye 5L and the right eye 5R of the user 13 to cause parallax between the two eyes of the user 13. The display 20 displays left-eye images on the left-eye viewing areas 201L and right-eye images on the right-eye viewing areas 201R. In other words, the display 20 displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. In other words, the left-eye viewing areas 201L and the right-eye viewing areas 201R may be arranged alternately in a predetermined direction including a component in the parallax direction. The pitch between the alternately arranged left-eye viewing areas 201L and right-eye viewing areas 201R is also referred to as a parallax image pitch. The left-eye viewing areas 201L and the right-eye viewing areas 201R may be spaced from each other or adjacent to each other. The display 20 displays a planar image on the second display area 202. A planar image causes no parallax between the eyes 5 of the user 13 and is not viewed stereoscopically.

As shown in FIG. 4, the barrier 21 includes a first barrier area 211 and a second barrier area 212. The barrier 21 located nearer the user 13 than the display 20 controls the transmittance of image light emitted from the display 20. The first barrier area 211 corresponds to the first display area 201, and controls the transmittance of image light for a parallax image emitted from the first display area 201. The first barrier area 211 includes open areas 21b and light-blocking surfaces 21a. The open areas 21b transmit light entering the barrier 21 from the display 20. The open areas 21b may transmit light with a transmittance of a first predetermined value or greater. The first predetermined value may be, for example, 100% or a value close to 100%. The light-blocking surfaces 21a block light entering the barrier 21 from the display 20. The light-blocking surfaces 21a may transmit light with a transmittance of a second predetermined value or smaller. The second predetermined value may be, for example, 0% or a value close to 0%. The first predetermined value is greater than the second predetermined value.

The open areas 21b and the light-blocking surfaces 21a are arranged alternately in u-direction indicating the parallax direction. The boundaries between the open areas 21b and the light-blocking surfaces 21a may extend in v-direction orthogonal to the parallax direction as shown in FIG. 4, or in a direction inclined with respect to v-direction at a predetermined angle. In other words, the open areas 21b and the light-blocking surfaces 21a may be arranged alternately in a predetermined direction including a component in the parallax direction.

The shapes of the open areas 21b and the light-blocking surfaces 21a may be determined based on the shapes of the left-eye viewing areas 201L and the right-eye viewing areas 201R. Conversely, the shapes of the left-eye viewing areas 201L and the right-eye viewing areas 201R may be determined based on the shapes of the open areas 21b and the light-blocking surfaces 21a.

The second barrier area 212 corresponds to the second display area 202, and controls the transmittance of image light for a planar image emitted from the second display area 202. The second barrier area 212 may transmit light with a transmittance of a third predetermined value or greater. The third predetermined value may be, for example, 100% or a value close to 100%.

In the present embodiment, the barrier 21 is more away from the user 13 than the display 20 along the optical path. The barrier 21 controls the transmittance of light directed from the backlight 19 to the display 20. The open areas 21b transmit light directed from the backlight 19 to the display 20. The light-blocking surfaces 21a block light directed from the backlight 19 to the display 20. This structure allows light entering the first display area 201 to travel in a predetermined direction. Thus, the barrier 21 can control a part of image light to reach the left eye 5L of the user 13, and another part of the image light to reach the right eye 5R of the user 13.

The barrier 21 may include a liquid crystal shutter. The liquid crystal shutter can control the transmittance of light in accordance with a voltage applied. The liquid crystal shutter may include multiple pixels and control the transmittance of light for each pixel. A liquid crystal shutter can form an area with high light transmittance or an area with low light transmittance in an intended shape. The open areas 21b in the barrier 21 including a liquid crystal shutter may have a transmittance of the first predetermined value or greater. The light-blocking surfaces 21a in the barrier 21 including a liquid crystal shutter may have a transmittance of the second predetermined value or smaller. The first predetermined value may be greater than the second predetermined value. The ratio of the second predetermined value to the first predetermined value may be set to 1/100 in one example. The ratio of the second predetermined value to the first predetermined value may be set to 1/1000 in another example. The barrier 21 including the open areas 21b and the light-blocking surfaces 21a that can deform is also referred to as an active barrier.

The controller 24 controls the display 20. The controller 24 may control the barrier 21 that is an active barrier. The controller 24 may control the backlight 19. The controller 24 may obtain, from the detector 11, information about the positions of the eyes 5 of the user 13, and control the display 20, the barrier 21, or the backlight 19 based on the information. The controller 24 may be, for example, a processor. The controller 24 may include one or more processors. The processors may include a general-purpose processor that reads a specific program to perform a specific function, and a processor dedicated to specific processing. The dedicated processor may include an application-specific integrated circuit (ASIC). The processor may include a programmable logic device (PLD). The PLD may include a field-programmable gate array (FPGA). The controller 24 may be a system-on-a-chip (SoC) or a system in a package (SiP) in which one or more processors cooperate with other components.

The communicator 22 may include an interface that can communicate with an external device. The external device may include, for example, the detector 11. The communicator 22 may obtain information from the detector 11 and output the information to the controller 24. The interface that can perform communication in the present disclosure may include, for example, a physical connector and a wireless communication device. The physical connector may include an electric connector for transmission with electric signals, an optical connector for transmission with optical signals, and an electromagnetic connector for transmission with electromagnetic waves. The electric connector may include a connector complying with IEC 60603, a connector complying with the universal serial bus (USB) standard, or a connector used for an RCA terminal. The electric connector may include a connector used for an S terminal specified by EIAJ CP-121aA or a connector used for a D terminal specified by EIAJ RC-5237. The electric connector may include a connector complying with the High-Definition Multimedia Interface (HDMI, registered trademark) standard or a connector used for a coaxial cable including a British Naval Connector, also known as, for example, a Baby-series N Connector (BNC). The optical connector may include a connector complying with IEC 61754. The wireless communication device may include a wireless communication device complying with the Bluetooth (registered trademark) standard and a wireless communication device complying with other standards including IEEE 802.1a. The wireless communication device includes at least one antenna.

The storage 23 may store various information sets or programs for causing the components of the 3D display device 17 to operate. The storage 23 may include, for example, a semiconductor memory. The storage 23 may function as a work memory for the controller 24. The controller 24 may include the storage 23.

As shown in FIG. 5, light emitted from the backlight 19 passes through the barrier 21 and the display 20 to reach the eyes 5 of the user 13. The broken lines indicate the paths traveled by light from the backlight 19 to reach the eyes 5. The light through the open areas 21b in the barrier 21 to reach the right eye 5R passes through the right-eye viewing areas 201R in the display 20. In other words, light through the open areas 21b allows the right eye 5R to view the right-eye viewing areas 201R. The light through the open areas 21b in the barrier 21 to reach the left eye 5L passes through the left-eye viewing areas 201L in the display 20. In other words, light through the open areas 21b allows the left eye 5L to view the left-eye viewing areas 201L.

The display 20 displays left-eye images on the left-eye viewing areas 201L and right-eye images on the right-eye viewing areas 201R. Thus, the barrier 21 allows image light for the left-eye images to reach the left eye 5L and image light for the right-eye images to reach the right eye 5R. More specifically, the open areas 21b allow image light for the left-eye images to reach the left eye 5L of the user 13 and image light for the right-eye images to reach the right eye 5R of the user 13. The 3D display device 17 with this structure can project a parallax image to the two eyes of the user 13. The user 13 views a parallax image with the left eye 5L and the right eye 5R to view the image stereoscopically. A direction that causes parallax between the two eyes of the user 13 is also referred to as a parallax direction. The parallax direction corresponds to the direction in which the left eye 5L and the right eye 5R of the user 13 are located.

The user 13 having stereoscopic vision may lose stereoscopic vision when the left eye 5L receives image light for the right-eye images or when the right eye 5R receives image light for the left-eye images. A phenomenon in which the left eye 5L receives image light for right-eye images or the right eye 5R receives image light for left-eye images is also referred to as crosstalk. Crosstalk deteriorates the quality of a stereoscopic image provided to the user 13. The barrier 21 prevents image light for the left-eye images from reaching the right eye 5R and image light for the right-eye images from reaching the left eye 5L. More specifically, the light-blocking surfaces 21a prevent image light for the left-eye images from reaching the right eye 5R of the user 13 and image light for the right-eye images from reaching the left eye 5L of the user 13. This structure allows the user 13 to view left-eye images with the left eye 5L alone and right-eye images with the right eye 5R alone. Crosstalk is thus less likely to occur.

Light through the open areas 21b in the barrier 21 is emitted from the display surface 20a of the display 20 as image light and reaches the optical member 15 through the optical element 18. The image light is reflected off the optical member 15 and reaches the eyes 5 of the user 13. This allows the eyes 5 of the user 13 to view a second virtual image 14b located more away in the negative z-direction than the optical member 15. The second virtual image 14b corresponds to the image appearing on the display surface 20a. The open areas 21b and the light-blocking surfaces 21a in the barrier 21 form a first virtual image 14a in front of the optical member 15 and more away in the negative z-direction than the second virtual image 14b. As shown in FIG. 1, the user 13 can view an image with the display 20 appearing to be at the position of the second virtual image 14b and the barrier 21 appearing to be at the position of the first virtual image 14a.

The 3D display device 17 emits image light for the image appearing on the display surface 20a in a direction defined by the barrier 21. The optical element 18 reflects or refracts the image light to direct the light to the optical member 15. The optical member 15 reflects the image light to direct the light to the eyes 5 of the user 13. The image light entering the eyes 5 of the user 13 causes the user 13 to view a parallax image as a virtual image 14. The user 13 views the virtual image 14 stereoscopically. An image corresponding to the parallax image in the virtual image 14 is also referred to as a parallax virtual image. A parallax virtual image is a parallax image projected through the optical system 30. An image corresponding to the planar image in the virtual image 14 is also referred to as a planar virtual image. A planar virtual image is a planar image projected through the optical system 30.

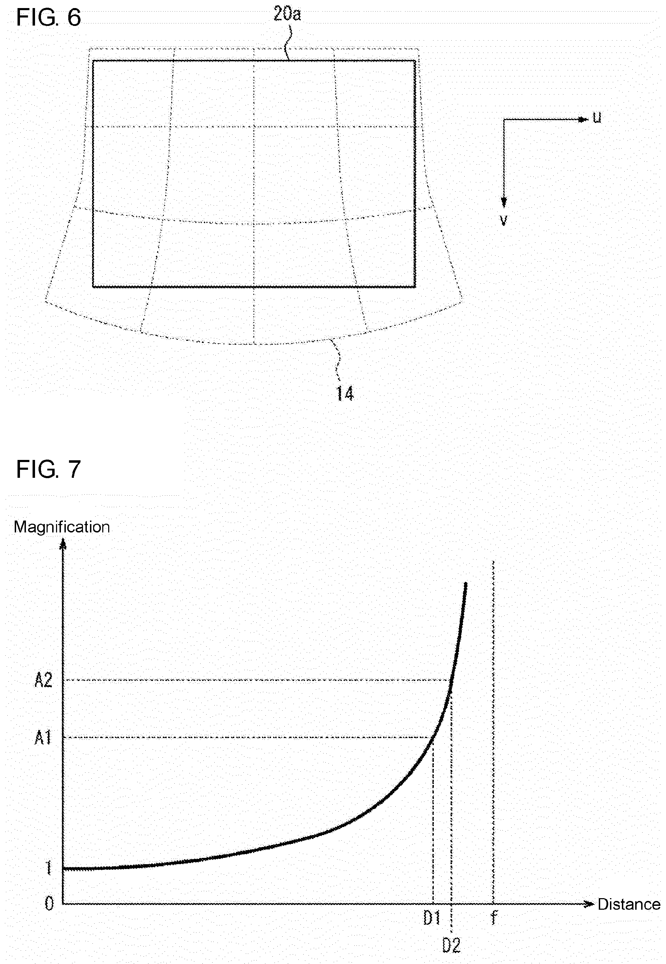

A parallax virtual image viewable by the user 13 is projected to the eyes 5 of the user 13 through the optical system 30. The optical system 30 may be to project an image input with incident image light by enlarging or reducing the image while maintaining the relative similarity of the image. However, the optical system 30 may not maintain the relative similarity between the input image and the image to be projected. More specifically, distortion may occur between a parallax image yet to be input into the optical system 30 and a parallax image (parallax virtual image) projected through the optical system 30. For example, as shown in FIG. 6, a virtual image 14 distorted to be enlarged in u-direction in the positive v-direction may result from projecting an image appearing on the rectangular display surface 20a to the eyes 5 of the user 13 through the optical system 30. The solid lines indicate the shape of the display surface 20a. The broken lines indicate the shape of the virtual image 14. The virtual image 14 includes a parallax virtual image and a planar virtual image. A parallax virtual image with greater distortion is more likely to cause crosstalk. Distortion of a planar virtual image is unrelated to crosstalk. Distortion of the virtual image 14 causes crosstalk to be more observable by the user 13. More specifically, distortion of a parallax virtual image is more likely to deteriorate the quality of a stereoscopic image provided to the user 13 than distortion of a planar virtual image.

Eliminating all distortion in the optical system 30 is difficult. Changing the distribution of distortion in the optical system 30 is easier than eliminating the distortion. The optical system 30 in the 3D projector 12 according to the present embodiment is thus designed to allow a parallax image projected through the optical system 30 to have less distortion than a planar image projected through the optical system 30. More specifically, the optical system 30 may have an area with distortion with a predetermined value or greater distributed to an area through which image light for a planar image passes, and may have an area with distortion with a value smaller than the predetermined value distributed to an area through which image light for a parallax image passes. For example, the optical system 30 may be designed to allow an area corresponding to the first display area 201 to have less distortion, and to allow an area corresponding to the second display area 202 to have greater distortion. This structure can improve the quality of a stereoscopic image provided to the user 13 through the optical system 30 even with distortion.

A parallax image includes right-eye images and left-eye images alternately arranged in the parallax direction. The display 20 displays, on the display surface 20a, right-eye images on the right-eye viewing areas 201R and left-eye images on the left-eye viewing areas 201L. A parallax image (parallax virtual image) projected through the optical system 30 having distortion in the parallax direction is more likely to cause right-eye images to be included in the left-eye viewing areas 201L and left-eye images to be included in the right-eye viewing areas 201R in the parallax image. In other words, distortion in the parallax direction easily causes crosstalk.

Distortion in the optical system 30 is represented by composition of a component of distortion in the parallax direction and a component of distortion in a direction intersecting with the parallax direction. Controlling the direction of distortion in the optical system 30 is easier than eliminating the distortion. The optical system 30 may thus be designed to allow distortion in the optical system 30 to include a component of distortion in the parallax direction less than a component of distortion in a direction intersecting with the parallax direction. This structure can improve the quality of a stereoscopic image provided to the user 13 through the optical system 30 even with distortion.

The optical system 30 may be a single concave mirror. A projection target object is projected with the concave mirror to form a virtual image 14 viewable by the user 13. The magnification of the virtual image 14 changes depending on the distance between the projection target object and the concave mirror as shown in FIG. 7. In FIG. 7, the horizontal axis represents the distance between the projection target object and the concave mirror, and the vertical axis represents the magnification of the virtual image 14. The focal point of the concave mirror is represented by f. When the distance between the projection target object and the concave mirror is 0, or when the projection target object is on the concave mirror, the magnification of the virtual image 14 is 1x (same magnification). When the distance between the projection target object and the concave mirror is f, or when the projection target object is at the focal point of the concave mirror, the magnification of the virtual image 14 diverges to infinity. As the distance between the projection target object and the concave mirror approaches f, the magnification of the virtual image 14 increases and also the rate of change in the magnification of the virtual image 14 with respect to the change in the distance increases.

In the present embodiment, the barrier 21 is more away from the optical system 30 than the display surface 20a. In other words, the distance of the optical path between the barrier 21 and the optical system 30 is larger than the distance between the display surface 20a and the optical system 30. The distance between the display surface 20a and the optical system 30 is represented by D1. The distance between the barrier 21 and the optical system 30 is represented by D2. Thus, D2 > D1. The magnification is A1 for the distance D1 between the projection target object and the concave mirror, and is A2 for the distance D2. In the graph in FIG. 7, A2 > A1. In other words, the second virtual image 14b corresponding to the barrier 21 has a higher magnification than the first virtual image 14a corresponding to the display surface 20a. When the barrier 21 has the same area as the display surface 20a, the second virtual image 14b has a larger area than the first virtual image 14a. The second virtual image 14b thus covers the first virtual image 14a. More specifically, in the parallax virtual image viewable by the user 13, the barrier 21 covers an image appearing on the display surface 20a. When the barrier 21 fails to cover a part of an image appearing on the display surface 20a, the uncovered part causes crosstalk. The barrier 21 covers the image appearing on the display surface 20a to reduce the likelihood of crosstalk occurring. This can improve the quality of a stereoscopic image provided to the user 13.

The optical system 30 represented by a single concave mirror projects the 3D display device 17 as a projection target object to form a virtual image 14. Distortion of the virtual image 14 changes depending on the distance between the projection target object and the optical system 30. For example, a virtual image 14 of a projection target object at a first distance from the optical system 30 has distortion different from distortion of a virtual image 14 of the projection target object at a second distance from the optical system 30. The optical system 30 can be designed to minimize the distortion of a virtual image 14 of the projection target object at a predetermined distance from the optical system 30.

The display surface 20a and the barrier 21 are located with a predetermined gap represented by g in FIG. 5 between them. In other words, the distance between the display surface 20a and the optical system 30 differs from the distance between the barrier 21 and the optical system 30. In this case, distortion of the first virtual image 14a corresponding to the display surface 20a differs from distortion of the second virtual image 14b corresponding to the barrier 21. Distortion of the second virtual image 14b deforms the right-eye viewing areas 201R and the left-eye viewing areas 201L in the first virtual image 14a. The deformed right-eye viewing areas 201R and left-eye viewing areas 201L increase the likelihood that right-eye images are included in the left-eye viewing areas 201L and left-eye images are included in the right-eye viewing areas 201R. Distortion of the first virtual image 14a can be corrected by distorting the image appearing on the display 20 based on a matrix inversely transformed from a matrix representing the distortion in the optical system 30. In other words, distortion of the second virtual image 14b is more likely to cause crosstalk than distortion of the first virtual image 14a. Thus, the optical system 30 may be designed to allow a virtual image for the barrier 21 to have less distortion than a virtual image for the display surface 20a. The 3D display device 17 may be positioned relative to the optical system 30 to allow a virtual image for the barrier 21 to have less distortion than a virtual image for the display surface 20a. In other words, the barrier 21 may be located to minimize the distortion in the optical system 30. This structure can improve the quality of a stereoscopic image provided to the user 13 through the optical system 30 even with distortion.

The structure according to the present disclosure is not limited to the structure described in the above embodiments, but may be modified or altered variously. For example, the functions of the components are reconfigurable unless any contradiction arises. A plurality of components may be combined into a single unit or a single component may be divided into separate units.

The drawings used to describe the structures of one or more embodiments of the present disclosure are schematic and are not drawn to scale relative to the actual size of each component.

In the present disclosure, the first, the second, or others are identifiers for distinguishing the components. The identifiers of the components distinguished with the first, the second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the orders of the components or to determine the existence of smaller number identifiers.

In the present disclosure, x-axis, y-axis, and z-axis are used for ease of explanation and may be interchangeable with one another. The orthogonal coordinate system including x-axis, y-axis, and z-axis is used to describe the structures according to the present disclosure. The positional relationship between the components of the present disclosure is not limited to the orthogonal relationship.

### Reference Signs List

- 5: eye (5L: left eye, 5R: right eye)
- 10: movable object
- 12: 3D projector (image display module)
- 13: user
- 14: virtual image (14a: first virtual image, 14b: second virtual image)
- 15: optical member
- 16: eye box
- 17: 3D display device
- 18: optical element (18a: first mirror, 18b: second mirror)
- 19: backlight
- 20: display (20a: display surface)
- 201: first display area
- 201L: left-eye viewing area
- 201R: right-eye viewing area
- 202: second display area
- 21: barrier (21a: light-blocking surface, 21b: open area)
- 211: first barrier area
- 212: second barrier area
- 22: communicator
- 23: storage
- 24: controller
- 30: optical system
- 100: 3D projection system

## Claims

1. An image display module, comprising:
a display configured to display a planar image and a parallax image projected to a first eye and a second eye of a user through an optical system;
a barrier configured to cause parallax between the first eye and the second eye by defining a traveling direction of image light for the parallax image; and
a concave mirror including a part of the optical system,
wherein the parallax image projected through the optical system has less distortion than the planar image projected through the optical system.

2. The image display module according to claim 1, wherein
the distortion of the parallax image projected through the optical system includes a component in a parallax direction causing parallax between the first eye and the second eye and a component in a direction intersecting with the parallax direction, and
the component in the parallax direction is less than the component in the direction intersecting with the parallax direction.

3. A movable object, comprising:
an image display module including
a display configured to display a planar image and a parallax image projected to a first eye and a second eye of a user through an optical system,
a barrier configured to cause parallax between the first eye and the second eye by defining a traveling direction of image light for the parallax image, and
a concave mirror including a part of the optical system; and
a windshield including a part of the optical system,
wherein the parallax image projected through the optical system has less distortion than the planar image projected through the optical system.

4. A concave mirror, comprising:
a part of an optical system, the optical system being configured to project a planar image and a parallax image to a first eye and a second eye of a user,
wherein the parallax image projected through the optical system has less distortion than the planar image projected through the optical system.

5. An image display module, comprising:
a display configured to display a parallax image projected to a first eye and a second eye of a user through an optical system;
a barrier configured to cause parallax between the first eye and the second eye by defining a traveling direction of image light for the parallax image; and
a concave mirror including a part of the optical system,
wherein an image for the barrier projected through the optical system has less distortion than an image for the display projected through the optical system.

6. An image display module, comprising:
a display configured to display a parallax image projected to a first eye and a second eye of a user through an optical system;
a barrier configured to cause parallax between the first eye and the second eye by defining a traveling direction of image light for the parallax image; and
a concave mirror including a part of the optical system,
wherein the barrier has a magnification provided by the optical system higher than a magnification of the display provided by the optical system.
